# EUROPEAN PATENT SPECIFICATION

(11) **EP 2 530 139 B1**
(45) Date of publication and mention of the grant of the patent: **13.08.2014**
(21) Application number: 11734810.2
(22) Date of filing: 25.01.2011
(51) Int. Cl.: A23L 1/00, C11B 9/00, A23L 1/22, B01J 2/16, B01J 2/28, A23L 1/212, A23L 1/221

(54) **PROCESS FOR PRODUCTION OF FLAVOR GRANULES**
VERFAHREN ZUR HERSTELLUNG EINES DUFTGRANULATS
PROCÉDÉ DE PRODUCTION DE GRANULÉS AROMATISANTS

(30) Priority: 25.01.2010 JP 2010013578
(43) Date of publication of application: 05.12.2012
(73) Proprietor: Japan Tobacco, Inc., Tokyo 105-8422 (JP)
(72) Inventor: CHIDA, Masahiro, Sumida-ku, Tokyo 130-8603 (JP)
(74) Representative: Isarpatent
(86) International application number: PCT/JP2011/051296
(87) International publication number: WO 2011/090204

(56) References cited:
- EP-A1- 0 011 324
- WO-A1-2004/084863
- JP-A- 8 047 378
- JP-A- 2001 086 971
- US-A- 6 056 949
- NAGAYOSHI AKE ET AL.: 'Foodstuff pelletizing and drying technology and equipment' JAPAN FOOD SCIENCE vol. 24, no. 3, 1985, pages 43 - 49, XP008163093
- 'Hyojun Gijutsushu Noyaku Seizai Gijutsu B-1- (5) Kanso Gijutsu', [Online] 28 August 2001, XP008163494 Retrieved from the Internet: <URL:http://www.jpo.go.jp/shiryou/s_sonota/ hyoujun gijutsu/nouyaku/0012.html> [retrieved on 2011-02-23]

## Description

### Technical Field

The present invention relates to a method of producing flavor granules, more specifically relates to a method of producing flavor granules utilizing a fluidized granulation and drying method.

### Background Art

There are many methods of producing flavor granules from a raw flavor powder obtained by processing a raw flavor derived from a natural substance such as a plant into a powdery form, and a method comprising mixing the raw flavor powder, an excipient and a solvent to form slurry, and spray drying the slurry is generally known. Spray drying is a technique that is widely used not only in the field of the production of flavors but also in the field of the production of powder, but the technique had a problem that the powder obtained by such spray drying generally comprise an excipient at a high content ratio, and as the result, the flavor powder obtained by spray drying contains an effective flavor component at a low content ratio.

Meanwhile, in the case where a general commercially available raw material powder is used in the production of flavor granules from a raw material powder derived from a natural substance, it was difficult to remove components derived from the raw material including green grass odor components, irritating odor components and the like by a conventional method. In order to remove such unnecessary components such as green grass odor components and irritating odor components, it is necessary to use a high grade raw material that has been specially purified, or a separate purification method. However, a high grade raw material is naturally expensive, and it is necessary to optimize treatment conditions that correspond to a raw material used in carrying out the separate purification method, which consequently lead to increase in the production costs.

On the other hand, a fluidized granulation and drying process is a process for continuously producing granular particles by forming a fluidized bed by blowing hot air into a raw material powder, and spraying water or a binder liquid onto this fluidized bed to form agglomerated masses of the raw material powder. This is used in, for example, production of food granules containing a medicinal component (Jpn. Pat. Appln. KOKAI Publication No. 2003-321355), and is also preferable for controlling the particle size of product granules (U.S. Patent Application No. 2009/0035372). Furthermore, since the fluidized granulation and drying process uses a raw material in the form of powder, granules having any particle size can be produced also from a raw material that is difficult to form slurry and thus is not suitable for spray drying. Therefore, the fluidized granulation and drying process is known as a useful process that is applied to a relatively wide range in the field of the production of powder.

However, as described in Jpn. Pat. Appln. KOKAI Publication No. 2006-158333, since raw materials are exposed to a high temperature in a fluidized granulator and dryer, use of a fluidized granulator and dryer tends to be avoided for flavors, probably because of possibility of denaturation by heat. US 6056949 discloses a method for production flavour granules, comprising the steps:
a) spraying a binder liquid (emulsion comprising water, maltodextrin, modified starch and lemon oil) onto a powder/coarse sugar while blowing air (at 20-80°C) to the raw flavour powder to form a fluidized bed of the raw flavour powder and
b) drying the raw flavour powder after the step a).

### Disclosure of Invention

The present inventors have done intensive studies so as to solve the above-mentioned problem, and found that flavor granules in which an flavor component has been sufficiently concentrated and from which unnecessary components such as irritating odor components have been removed can be obtained easily by repeatedly performing spray drying cycles each comprising spraying water or a solution of a water-soluble flavor (a binder liquid) onto a fluidized bed of a raw flavor powder in a fluidized granulator and dryer until the moisture content of the raw flavor powder reaches a critical moisture content under fluidization (Uf), and drying the raw flavor powder until the moisture content of the raw flavor powder reaches an equilibrium moisture content (Ue).

That is, according to an aspect of the present invention, there is provided a method of producing flavor granules, comprising a cycle comprising steps of: a) spraying water or a binder liquid onto a raw flavor powder until a moisture content of the raw flavor powder reaches a critical moisture content under fluidization (Uf) while blowing hot air to the raw flavor powder to form a fluidized bed of the raw flavor powder, and b) drying the raw flavor powder after the step a) until the moisture content of the raw flavor powder reaches an equilibrium moisture content (Ue), wherein the cycles are repeated two or more times.

### Brief Description of Drawings

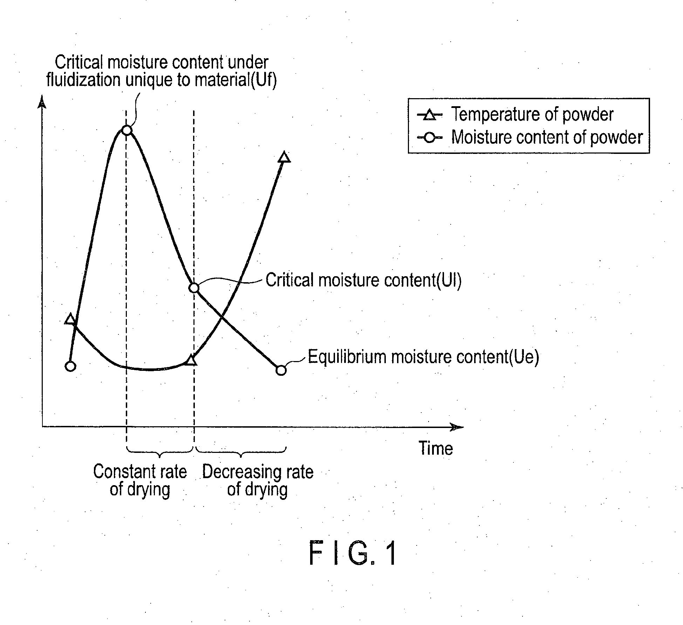

FIG. 1 is a graph showing the moisture content of the raw material powder against the time, which is observed in the cycle until the moisture content of the raw flavor powder reaches an equilibrium moisture content (Ue) after spraying water onto the raw flavor powder (the open circle series in the drawing) and the temperature of the raw flavor powder in the fluidized granulator and dryer against the time (the open triangle series in the drawing), respectively;

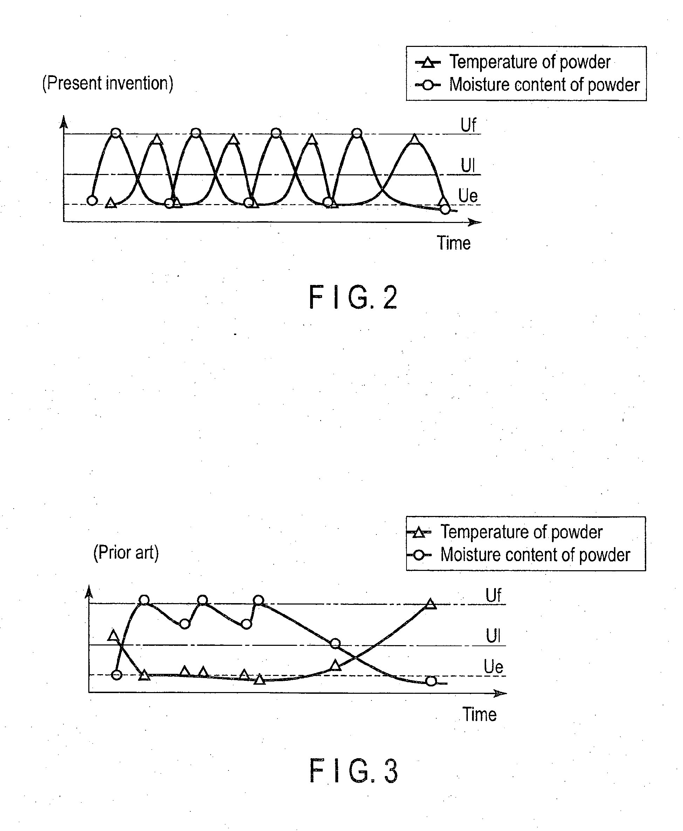

FIG. 2 is a graph showing the moisture content of the raw flavor powder against the time, which is observed in the case where the cycles in FIG. 1 are repeated plural times (the open circle series in the drawing) and the temperature of the raw flavor powder in the fluidized granulator and dryer against the time (the open triangle series in the drawing), respectively;
FIG. 3 is a graph showing the moisture content of the raw flavor powder against the time in the case where the raw flavor powder is subjected to intermediate drying while maintaining the raw flavor powder at a critical moisture content (Ul) or more after spraying water onto the raw flavor powder (the open circle series in the drawing) and the temperature of the raw flavor powder in the fluidized granulator and dryer against the time (the open triangle series in the drawing), respectively;

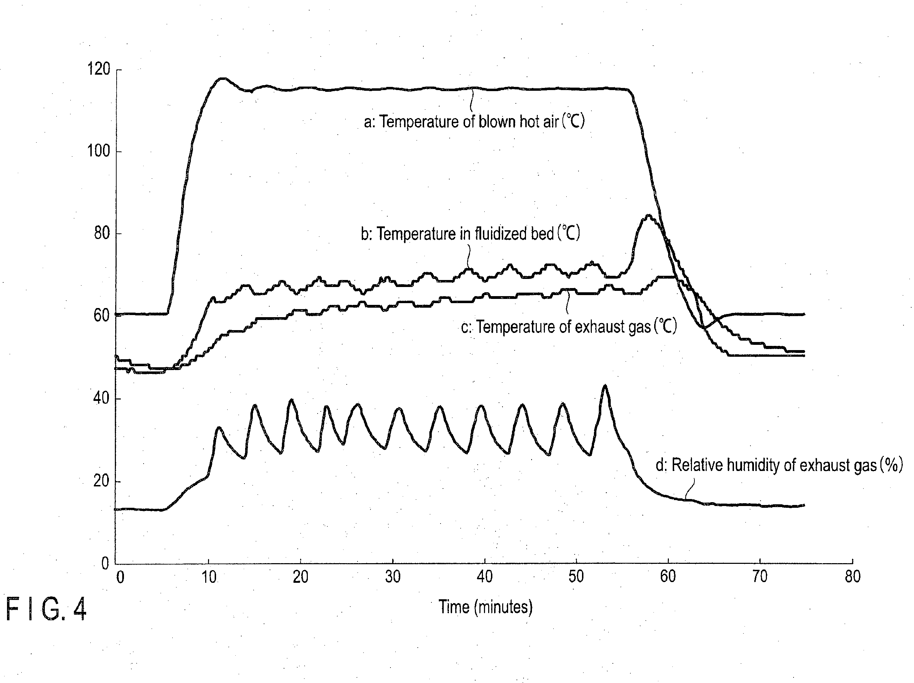

FIG. 4 relates to the analysis result of the sample obtained by an embodiment of the present invention, and is a graph showing the relationship between the temperature of the hot air blown from the fluidized granulator and dryer against the time (the line a in the drawing), the temperature in the fluidized bed which shows a value that is approximately equal to the temperature of the raw flavor powder (the line b in the drawing), the temperature of the exhaust gas (the line c in the drawing) and the relative humidity of the exhaust gas (the line d in the drawing);

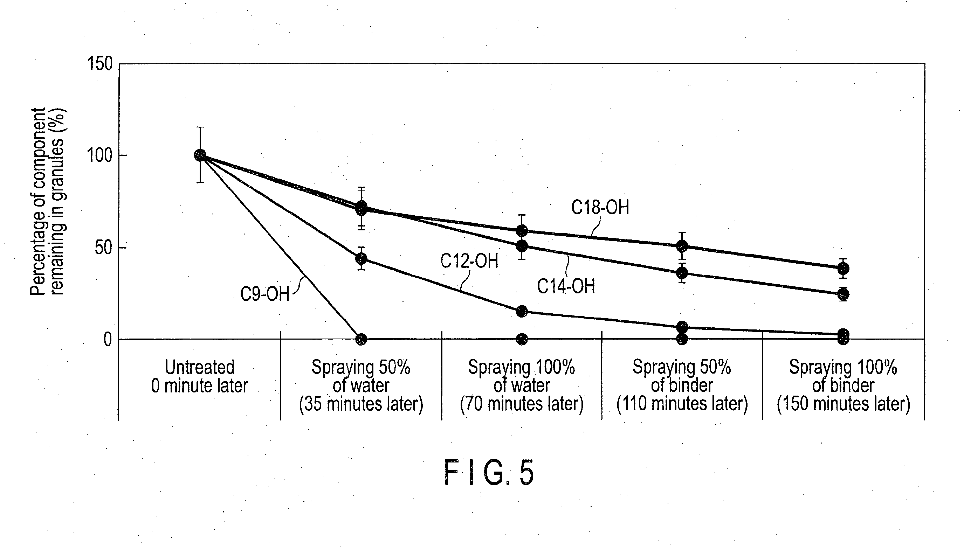

FIG. 5 relates to the analysis result of the sample obtained by an embodiment of the present invention, and is a graph showing the change in the remaining percentages of the aliphatic acid-based alcohols against the time;

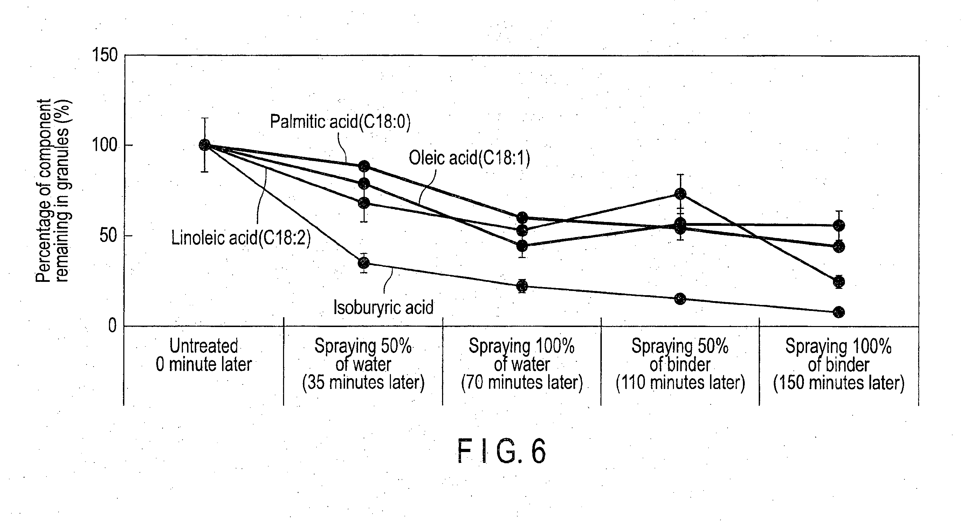

FIG. 6 relates to the analysis result of the sample obtained by an embodiment of the present invention, and is a graph showing the change in the remaining percentages of the aliphatic acids against the time;

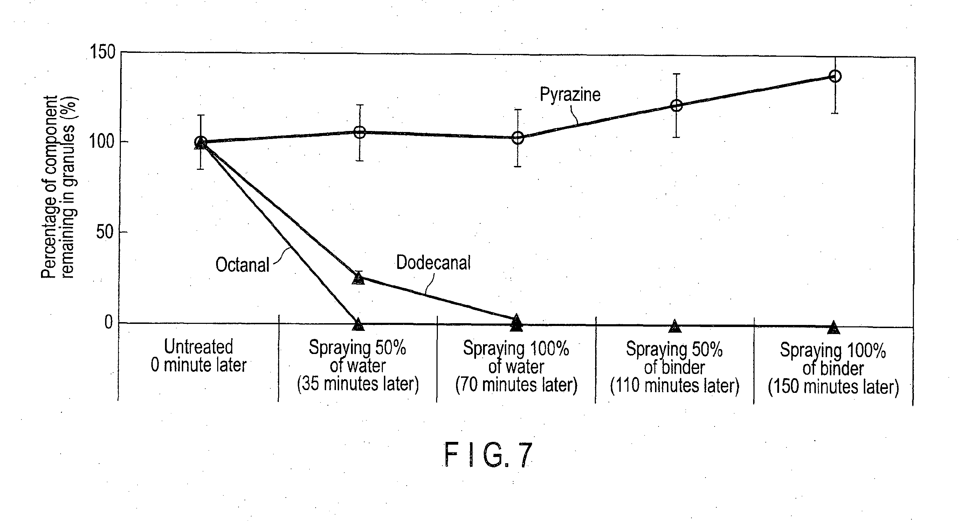

FIG. 7 relates to the analysis result of the sample obtained by an embodiment of the present invention, and is a graph showing the change in the remaining percentages in powder of the aliphatic acid-based aldehydes (the solid triangle series in the drawing) and of the pyrazines (the open circle series in the drawing) against the time; and

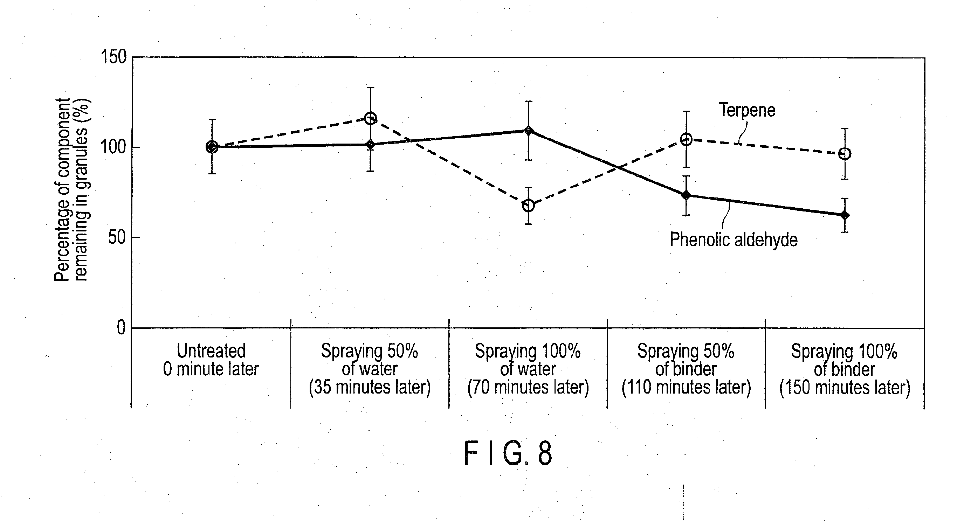

FIG. 8 relates to the analysis result of the sample obtained by an embodiment of the present invention, and is a graph showing the change in the remaining percentages of the terpenes (the open circle series in the drawing) and of the phenolic aldehydes (the solid rhombus series in the drawing) against the time.

### Best Mode for Carrying Out the Invention

One feature of the present invention is that a fluidized granulation and drying process is used. In general, in the fluidized granulation and drying process, hot air is first blown into a raw flavor powder from below to form a fluidized bed of the raw flavor powder. Fine droplets comprising water, an aqueous solution, an organic solvent or other solution are sprayed onto the fluidized bed from the bottom, side, top or the like, thereby granules having any particle size comprising a liquid crosslink of said sprayed liquid or wet coagulated mass of the raw material powder are formed. When the spraying of the droplets is stopped, granules are dried by hot air that has been blown continuously. The granules are finally cooled under cold air to give desired granules.

Here, the granulation and drying process according to the present invention will be outlined with reference to FIG. 1 (see "Unit Operation For Handling Powder Particles - Drying", "Powder Technology Handbook" (1998), edited by The Society of Powder Technology, Japan, published by Nikkan Kogyo Shimbun, Ltd., p. 365, FIG. 4.9.1).

In the present invention, water or a solution of a water-soluble flavor (a binder liquid) is sprayed onto a fluidized bed of a raw flavor powder until the moisture content of the raw flavor powder reaches a critical moisture content under fluidization (Uf). The sample temperature (sensible heat) of the raw flavor powder is decreased during the spraying of the water or binder liquid is continuing, whereas in a certain period after the spraying is stopped, all of the heat fed from the hot air is used for drying the raw material powder, and thus the moisture content of the raw material powder is decreased in a monotonous manner, whereas the temperature of the raw material powder is not changed from a constant temperature (constant rate of drying). In the period of constant rate of drying, the moisture in the raw flavor powder transfers from inside of the raw flavor powder to the surface by diffusion. When the drying continues and the moisture content of the raw flavor powder reaches a critical moisture content (Ul), the transfer velocity of the moisture in the raw material powder becomes slow, and the amount of the moisture transferred to the surface of the raw flavor powder and the amount of the moisture evaporated from the surface of the raw flavor powder is not balanced. Therefore, the amount of heat fed from the hot air is used in increase in the sample temperature (sensible heat) of the raw flavor powder, whereas the moisture content of the raw flavor powder gradually decreases and reaches an equilibrium moisture content (Ue), thereby the drying is completed (decreasing rate of drying).

Meanwhile, in the case where the raw flavor powder and/or binder liquid comprises a carbohydrate, a film comprising a thick carbohydrate liquid is formed on the surface of the raw flavor powder at the time of completion of the constant rate of drying, which is also observed in general granulation and drying processes such as spray drying. A substance transfers through this film very slowly, and thus the transfer velocity of water is significantly decreased as a matter of course, and molecules larger than water, i.e., most of flavor components, become impossible to pass this film. As the result, flavor components are enclosed in the raw material powder. This phenomenon is explained by "Selective Diffusion Theory" by Rulkens et al. (Rulkens, W. H., Thijssen, H. A., Journal of Food Technology, (7), 186-191 (1972)).

Furthermore, natural substances such as a raw flavor powder derived from a plant generally contain unnecessary components such as green grass odor components and acid and irritating odor components, and the like, besides effective flavor components. In the case where the raw flavor powder and/or binder liquid are/is derived from natural substance(s), it is desirable that these unnecessary components are selectively removed from final flavor granules or the contents thereof are controlled. In the case where the unnecessary components have relatively higher volatility than the flavor components, the effective flavor components are concentrated by the selective diffusion phenomenon whereas the contents of the unnecessary components in the flavor granules decrease as the drying proceeds. This tendency appears significantly by repeating cycles comprising spraying water or a binder liquid again and drying after completion of decreasing rate of drying.

Therefore, in the present invention, it is preferable to continuously repeat the above-mentioned spray drying cycles by plural times, specifically three or more times. The plural spray drying cycles can be performed in the same fluidized granulator and dryer. Here, the moisture content of the raw flavor powder against the time (the open circle series in the drawing) and the temperature of the raw flavor powder in the fluidized granulator and dryer against the time (the open triangle series in the drawing), which are observed in the case where the above-mentioned cycles are repeated plural times, are shown in FIG. 2. Furthermore, in the case where the above-mentioned cycles are repeated plural times, the spraying step in each cycle is defined as "intermittent spraying", the drying step between two "intermittent sprayings" is defined as "intermediate drying", and the time required for the "intermediate drying" is defined as "intermediate drying time" (namely, a spraying abeyance time between the intermittent sprayings). In the method of the present invention, the raw material powder is dried until the moisture content reaches an equilibrium moisture content (Ue) in the "intermediate drying" step.

Since the raw material powder is dried by exceeding a critical moisture content amount (Ul) in the method of the present invention, the raw flavor powder can be theoretically heated to about the temperature of the hot air used for fluidized granulation and drying.

On the other hand, FIG. 3 shows the state of generally performed intermittent spraying (or intermediate drying). In the case where fluidizing is deteriorated during the spraying of the binder, the liquid sending is stopped temporarily and intermediate drying is performed in general. The intermittent spraying refers to a spraying method in which intermediate dryings are repeated during the spraying of the binder, such as spraying for one minute and stopping spraying for two minutes. Actually, spraying is performed while fluidization is monitored, and the object thereof is to granulate a core material. Namely, plural drying times are set in the case where significant deterioration of fluidity is to be avoided in the case where the binder liquid is continuously sprayed onto the raw material powder, and at this time, they are performed so as to control constant rate of drying as well as the liquid sending velocity of the binder liquid. Namely, since it is a case where the raw material powder is dried while maintaining the moisture content thereof at a critical moisture content (Ul) or more, an advantageous modification effect as in the present invention cannot be obtained.

FIGS. 1 to 3 are conceptional drawings, and the moisture content of powder in these drawings is measured by directly monitoring the moisture state of powder in the fluidized bed by using a near infrared spectroscopy or the like. However, such monitoring method readily generates measurement errors, and it is general in actual production of granules that the moisture content of powder in a device is estimated from the humidity of the exhaust gas of a granulating device. FIG. 4 shows the relationship with the temperature of the blown hot air blown (the line a in the drawing), the temperature in the fluidized bed (the line b in the drawing), the temperature of the exhaust gas (the line c in the drawing) and the relative humidity of the exhaust gas from the fluidized granulator and dryer (the line d in the drawing) when granules are actually produced by the method of the present invention. Here, the critical moisture content under fluidization (Uf) in FIG. 4 is about 18% (about 42% for relative humidity of the exhaust gas), the critical moisture content (Ul) is about 7% (about 34% for relative humidity of the exhaust gas) and the equilibrium moisture content (Ue) is about 5% (about 31% for relative humidity of the exhaust gas). Furthermore, it is understood that the corresponding relationship between the relative humidity of the exhaust gas and the temperature in the fluidized bed in FIG. 4 conforms with the corresponding relationship between the moisture content of powder and temperature of powder in FIG. 2.

Hereinafter the method of the present invention will be explained more specifically.

Hereinafter "the moisture content of the powder" is measured by considering the relative humidity of the exhaust gas from the fluidized granulator and dryer as the moisture content of the raw flavor powder itself, and the "sample temperature" is measured by considering the temperature in the fluidized bed in the fluidized granulator and dryer as the sample temperature of the raw flavor powder itself.

a) First, hot air is blown into the raw flavor powder in the fluidized granulator and dryer to form a fluidized bed of the raw flavor powder, and water or a binder liquid is sprayed onto the fluidized bed until the moisture content of the raw flavor powder reaches a critical moisture content under fluidization (Uf).

The raw flavor powder contains a carbohydrate, and a raw material powder derived from a plant such as cocoa powder, St. John's bread powder, tea powder, malt powder and spice powder, flavor powder obtained by spray drying plant extract, or sugar powder or sugar granules can be used without being subjected to a special pretreatment. Alternatively, licorice extract powder that has been produced in advance by spray drying or the like may be used.

The raw flavor powder has an average particle size of 10 to 350 µm, and a raw flavor powder pulverized into 30 to 70 µm is specifically preferable so as to obtain a good effect of modification of plant powder.

The spray amount in the case where water is sprayed onto the raw flavor powder is 5 to 20% by weight, specifically preferably 10 to 15% by weight with respect to the raw flavor powder.

The binder liquid contains a carbohydrate, and extracts from any plant raw materials including carob, licorice, cacao mass, fenugreek, lavage, vanilla beans or tomato and the like, or synthesized flavor solutions or plant essential oils such as hydrocarbons such as pinene and limonene, chain terpene-based alcohols such as linalool and geraniol, cyclic terpene alcohols such as sesquiterpene, isopulegol and borneol, phenol derivatives such as anise alcohol and cinnamic alcohol, and cyclic ketones such as ethyl maltol and nootkatone, and formulated flavor solutions thereof, which include a carbohydrate, can be used.

In the case where the binder liquid is sprayed, it is preferable to adjust the sugar degree (Brix%) of the binder liquid to 5 to 70 degree, specifically 5 to 35 degree in advance.

When the moisture content reaches a critical moisture content under fluidization (Uf), the weight of the dried binder that has been sprayed by that time and the interaction of the raw material powder to which the binder has adhered (mainly liquid-crosslinking force) affect the formation of the fluidized bed. The total spray amount in the case where the binder liquid is sprayed onto the raw flavor powder is about 5 to 35% by weight in the case of the above-mentioned range of sugar degree, and 5 to 20% by weight is specifically preferable.

The temperature of the hot air may be a temperature at which the modification of the flavor component included in the raw flavor powder or binder liquid may be caused. Specific embodiments of the modification include removal of unnecessary components such as green grass odor components and acid odor components, elimination of odor by thermal modification of irritating odor components, and the like. In the case where the raw flavor powder is powder derived from a plant, modification effect may be caused in the flavor component at 95 to 150°C. In the case where the raw flavor powder is a sugar powder, in order to cause the modification of the flavor component included in the binder liquid, a temperature that is equal to or less than a temperature at which the used sugar powder burns, and 45 to 120°C is specifically preferable.

The absolute humidity of the hot air in the fluidized granulator and dryer is 10 to 25 g/m³, and 17 to 19 g/m³ is specifically preferable.

The blow velocity of the hot air is 0.4 to 1.2 m/min, and 0.6 to 1.0 m/min is specifically preferable.

Since the critical moisture content under fluidization (Uf) is unique to the raw flavor powder, the liquid sending amount of the spray liquid is also set in each case according to the raw flavor powder as used:

b) When the moisture content of the raw flavor powder reaches a critical moisture content under fluidization (Uf), spraying is stopped and the raw flavor powder is dried to an equilibrium moisture content (Ue).

In the present invention, the cycles comprising the above-mentioned steps a) and b) are repeated preferably two or more times, more preferably three or more times.

When the moisture content of the powder at the time when the moisture content reaches a critical moisture content under fluidization (Uf) that is unique to the raw flavor powder is 100%, the intermediate drying time is a time required for decreasing the moisture content to about 60 to 70%.

In carrying out the above-mentioned cycles repeatedly, the binder liquid may be sprayed after the raw flavor powder to which the water has been sprayed is subjected to intermediate drying, or the water may be sprayed after the raw flavor powder to which the binder liquid has been sprayed is subjected to intermediate drying. Specifically, the method of the present invention may comprise a first cycle in which the intermediate drying is performed immediately after the spraying of the water onto the raw flavor powder, and/or a second cycle in which the intermediate drying is performed immediately after the spraying of the binder liquid.

c) The finally obtained raw flavor powder is cooled at a stroke to a sample temperature of 35°C or less by using dried cold air to give flavor granules.

The finish of the obtained flavor granules is granules of 90 to 130 µm having excellent caking resistance and water dispersibility.

A modified essential oil can also be obtained by using flavor granules made by the method of the present invention as a raw material and newly undergoing a solvent extraction process and the like.

### Examples

Hereinafter Examples of the present invention will be explained, but the present invention is not limited by those Examples. The same fluidized granulator and dryer (MIXGRAD Type MGD-05 by Okawara Corporation) was used in all of the following Examples.

### [Example 1]

Sample granules were prepared according to the following procedures.

25 parts by weight of carob powder and 75 parts by weight of water were weighed, stirring extraction was performed at 60°C for 90 minutes, the solid and liquid were separated, and thereafter centrifugation was performed at 6,000 rpm to give a carob extraction liquid having a sugar degree of about 15, and this was used as a binder liquid.

5,000 g weight of the carob powder having an average particle size of 25 µm was put into a fluidized granulator and dryer, and hot air at 120°C and an absolute humidity of 16 to 18 g/m³ was blown into the powder at a wind velocity of 0.6 m/s to form a fluidized bed of the carob powder. While forming the fluidized bed, water at 35°C was sprayed at 30 to 40 g weight/min. This spraying was performed by repeating spraying for 1 minute and abeyance of spraying for 3 minutes (drying until Ue), and 750 g weight in total of water was intermittently sprayed onto the carob powder and intermediate drying was performed. After the final intermediate drying was completed, the above-mentioned binder liquid was sprayed at 30 to 40 g weight/min, and 750 g weight in total of the binder liquid was intermittently sprayed onto the carob powder by repeating spraying for 1 minute and abeyance of spraying for 3 minutes (drying until Ue). After the final intermediate drying was completed, the carob powder was cooled to about 30°C to give flavor powder.

The powder was sampled at every predetermined time in the above-mentioned steps, and 95 g weight of dichloromethane was added to 5 g weight of the intermediate powder, and stirring extraction was performed at an ordinary temperature for 1 hour. After still standing for about 30 minutes, the supernatant liquid was filtered by a glass fiber filter of 0.45 µm, and a gas chromatography column of the contained components was obtained. The transition of the components when the value of the initial component surface area was defined as 100% was shown in the following drawings: FIG. 5, FIG. 6, FIG. 7 and FIG. 8, respectively. The sampling was performed at the time of no treatment, at the time of completion of spraying of water of 50% of the total spray amount, at the time of completion of spraying of water of 100% of the total spray amount, at the time of completion of spraying of the binder liquid of 50% of the total spray amount, and at the time of completion of spraying of the binder liquid of 100% of the total spray amount, respectively.

It is understood from the graphs shown in FIG. 5 and FIG. 6 that the alkanols and alkanoic acid are removed significantly as the method proceeds, according to their respective vapor pressures. On the other hand, a tendency that the pyrazines derived from the binder liquid increase by the progress of the method was shown.

It is understood from the graph shown in FIG. 7 that the aliphatic aldehydes and straight chain hydrocarbons are removed significantly as the method proceeds. A tendency that the pyrazines derived from the binder liquid increase by the progress of the method was shown.

From the graph shown in FIG. 8, little change was observed in the remaining percentages of the terpenes and phenolic aldehydes which are effective flavor components even the method proceeded.

It was found from the above-mentioned experiments that the balance of the contained components is changed according to the degrees of the volatilities of the components in the steps, and control of the balance of the contained components may be achieved depending on the number of times of intermittent spraying.

### [Example 2]

An aqueous solution of 75 parts by weight of licorice was prepared and used as a binder liquid. 5,330 g weight of cocoa having an average particle size of 30 µm was put into a fluidized granulation-dryer, and hot air at 120°C and an absolute humidity of 16 to 18 g/m³ was blown into the powder at a wind velocity of 0.6 m/s to form a fluidized bed of the cocoa powder. While forming the fluidized bed, water was sprayed at 60 to 80 g weight/min. This spraying was performed by repeating spraying for 1 minute and abeyance of spraying for 3 minutes (drying until Ue), and 533 g weight in total of water was sprayed onto the cocoa powder, and the cocoa powder was dried. Furthermore, the binder liquid was sprayed at 130 to 160 g weight/min. This spraying was performed by repeating spraying for 1 minute and abeyance of spraying for 3 minutes (drying until Ue) in a similar manner to that for water, and 1066 g weight in total of a 5% isomerized sugar binder liquid was sprayed onto the licorice powder, and the licorice powder was dried. Finally, the powder was cooled to about 30°C by wind transportation to give a flavor powder.

The obtained flavor powder showed fine chocolate-like flavor with suppressed acid odor.

### [Example 3]

4,000 g weight of a licorice extract spray-dried powder having an average particle size of 90 µm was put into a fluidized granulation-dryer, and hot air at 120°C and an absolute humidity of 16 to 18 g/m³ was blown into the powder at a wind velocity of 0.6 m/s to form a fluidized bed of the licorice powder. While forming the fluidized bed, a 5% isomerized sugar binder liquid was sprayed at 25 to 35 g weight/min. This spraying was performed by repeating spraying for 30 seconds and abeyance of spraying for 90 seconds (drying until Ue), and 400 g weight in total of the 5% isomerized sugar binder liquid was sprayed onto the licorice powder, and the licorice powder was dried. Finally, the powder was cooled to about 30°C by wind transportation to give a flavor powder.

In the obtained flavor powder, chemical aroma that is unique to licorice had been decreased and a high licorice flavor titer was shown.

### [Example 4]

An aqueous solution of 40 parts by weight of licorice extract was prepared and used as a binder liquid.

4,000 g weight of a licorice extract spray-dried powder having an average particle size of 90 µm was put into a fluidized granulation-dryer, and hot air at 120°C and an absolute humidity of 16 to 18 g/m³ was blown into the powder at a wind velocity of 0.6 m/s to form a fluidized bed of the licorice powder. While forming the fluidized bed, the binder liquid was sprayed at 70 to 90 g weight/min. This spraying was performed by repeating spraying for 30 seconds and abeyance of spraying for 90 seconds (drying until Ue), and 1,000 g weight in total of the 5% isomerized sugar binder liquid was sprayed onto the licorice powder, and the licorice powder was dried. Finally, the powder was cooled to about 30°C by wind transportation to give a flavor powder.

In the obtained flavor powder, chemical aroma that is unique to licorice had been decreased and a high licorice flavor titer was shown.

### [Example 5]

5 parts by weight of cacao mass, 0.5 part by weight of lecithin and 94.5 parts by weight of water were weighed in advance, and using a emulsifying machine (PRIMX: ROBOMICS MARK II), 4,000 g weight of a licorice extract spray-dried powder having an average particle size of 30 µm was put into a fluidized granulation-dryer, and hot air at 120°C and an absolute humidity of 16 to 18 g/m³ was blown into the powder at a wind velocity of 0.6 m/s to form a fluidized bed of the licorice powder. While forming the fluidized bed, water was sprayed at 60 to 80 g weight/min. This spraying was performed by repeating spraying for 30 seconds and abeyance of spraying for 90 seconds (drying until Ue), and 400 g weight in total of water was sprayed onto the licorice extract spray-dried powder, and the powder was dried. Furthermore, the binder liquid was sprayed at 50 to 70 g weight/min. This spraying was performed by repeating spraying for 30 seconds and abeyance of spraying for 90 seconds (drying until Ue) in a similar manner to that for water, and 1,000 g weight in total of the binder liquid was sprayed onto the licorice extract spray-dried powder, and the powder was dried. Finally, the powder was cooled to about 30°C by wind transportation to give a flavor powder. The obtained flavor powder accompanied high chocolate-like flavor, and chemical aroma unique to licorice had been decreased.

### [Example 6]

25 parts by weight of carob powder and 75 parts by weight of water were weighed, stirring extraction was performed at 60°C for 90 minutes, the solid and liquid were separated, and thereafter centrifugation was performed at 6,000 rpm to give a carob extraction liquid having a sugar degree of about 15, and this was used as a binder liquid.

5,000 g weight of anhydrous glucose crystal having an average particle size of 200 µm was put into a fluidized granulator and dryer, and hot air at 80°C and an absolute humidity of 16 to 18 g/m³ was blown into the powder at a wind velocity of 0.6 m/s to form a fluidized bed of the anhydrous glucose crystal. While forming the fluidized bed, the binder liquid was sprayed at 30 to 40 g weight/min. This spraying was performed by repeating spraying for 30 seconds and abeyance of spraying for 60 seconds (drying until Ue), and 750 g weight in total of the binder liquid was sprayed onto the anhydrous glucose crystal, and the crystal was dried. Finally, the powder was cooled to about 30°C by wind transportation to give a flavor powder. In the obtained flavor powder, lactic acid odor that is unique to the carob powder had been decreased and high chocolate-like flavor was expressed.

### [Example 7]

An aqueous solution of 50 parts by weight of a carob extract was used as a binder liquid.

4,000 g weight of maltose crystal having an average particle size of 200 µm was put into a fluidized granulator and dryer, and hot air at 80°C and an absolute humidity of 16 to 18 g/m³ was blown into the powder at a wind velocity of 0.6 m/s to form a fluidized bed of the maltose crystal. While forming the fluidized bed, the binder liquid was sprayed at 40 to 60 g weight/min. This spraying was performed by repeating spraying for 30 seconds and abeyance of spraying for 60 seconds (drying until Ue), and 535 g weight in total of the binder liquid was sprayed onto the maltose crystal, and the crystal was dried. Finally, the powder was cooled to about 30°C by wind transportation to give a flavor powder. A powder flavor being completely soluble in water and having decreased aroma of lactic acid odor that is unique to the carob powder could be obtained.

### [Example 8]

An aqueous solution of 20 parts by weight of a fenugreek extract was prepared and used as a binder liquid.

6,000 g weight of anhydrous glucose crystal having an average particle size of 200 µm was put into a fluidized granulator and dryer, and hot air at 120°C and an absolute humidity of 16 to 18 g/m³ was blown into the powder at a wind velocity of 0.5 m/s to form a fluidized bed of the anhydrous glucose crystal. While forming the fluidized bed, the binder liquid was sprayed at 30 to 40 g weight/min. This spraying was performed by repeating spraying for 10 seconds and abeyance of spraying for 40 seconds (drying until Ue), and 600 g weight in total of the binder liquid was sprayed onto the anhydrous glucose crystal, and the crystal was dried. Finally, the powder was cooled to about 30°C by wind transportation to give a flavor powder. A powder flavor being completely soluble in water in which aroma of lactic acid odor that is unique to the carob powder had been decreased could be obtained.

### [Example 9]

An aqueous solution of 25 parts by weight of a lavage extract was prepared and used as a binder liquid.

3,000 g weight of anhydrous glucose crystal having an average particle size of 200 µm was put into a fluidized granulator and dryer, and hot air at 120°C and an absolute humidity of 16 to 18 g/m³ was blown into the powder at a wind velocity of 0.45 m/s to form a fluidized bed of the anhydrous glucose crystal. While forming the fluidized bed, the binder liquid was sprayed at 8 to 12 g weight/min. This spraying was performed by repeating spraying for 10 seconds and abeyance of spraying for 30 seconds (drying until Ue), and 250 g weight in total of the binder liquid was sprayed onto the anhydrous glucose crystal, and the crystal was dried. Finally, the powder was cooled to about 30°C by wind transportation to give a flavor powder. A powder flavor being completely soluble in water in which aroma of green grass odor that is unique to the lavage extract had been decreased could be obtained.

### [Example 10]

5,500 g weight of an extract residue raw material powder (average particle size: 120 µm), which can be obtained by extracting a flavor liquid from vanilla beans and drying and pulverizing the flavor liquid, was put into a fluidized granulator and dryer, and hot air at 120°C and an absolute humidity of 16 to 18 g/m³ was blown into the powder at a wind velocity of 0.45 m/s to form a fluidized bed. Water was sprayed at 8 to 12 g weight/min. This spraying was performed by repeating spraying for 1 minute and abeyance of spraying for 3 minutes (drying until Ue), and 500 g weight in total of water was sprayed onto the vanilla powder. Thereafter the powder was cooled to about 30°C by wind transportation to give a flavor powder. 100 g of the vanilla powder obtained as above was dissolved in 900 g weight of 10% hydrous ethanol, and stirring extraction was performed for 1 hour. Thereafter the solid and liquid were separated by using a centrifugal machine to give about 850 g of a vanilla flavor. In the obtained vanilla flavor, green grass odor had been decreased and flavor that is unique to vanilla had been increased.

### [Example 11]

5,000 g weight of a dried tomato powder having a moisture content of 4% was put into a fluidized granulator and dryer, and hot air at 120°C and an absolute humidity of 16 to 18 g/m³ was blown into the powder at a wind velocity of 0.6 m/s to form a fluidized bed. Water was sprayed at 8 to 12 g weight/min. This spraying was performed by repeating spraying for 1 minute and abeyance of spraying for 3 minutes (drying until Ue), and 500 g weight in total of water was sprayed onto the dried tomato powder. Thereafter the powder was cooled at a stroke to about 35°C by wind transportation to give a flavor powder. The obtained tomato powder had a moisture amount of 6%. 50 g of the tomato powder obtained as above was dissolved in 950 g of 5% weight aqueous ethanol, the solution was stirred in a warm bath, and stirring extraction was performed for 1 hour while the liquid temperature was maintained at 50°C. Thereafter the solid and liquid were separated by using a centrifugal machine to give about 890 g of a supernatant liquid, and 0.5% pectinase was added to the supernatant liquid and reacted at 40°C for 3 hours. Furthermore, the supernatant liquid was concentrated up to a sugar degree of 60 by a rotary evaporator while maintaining the liquid temperature at 75°C to give about 70 g weight of a tomato extract.

As a control, about 70 g weight of a tomato extraction was obtained in a similar manner by subjecting 49 g weight of a dried tomato powder having the same rod to similar treatments to those in the above-mentioned extraction operations.

In comparison with the control article, green odor that is unique to tomato had been eliminated, and sweet flavor could be enhanced. Furthermore, 30 g weight of ethanol with 95% purity was added to 30 g weight of the control tomato extract and mixed for 1 hour. Thereafter the mixture was stood still at 5°C, and the extract component deposited on the bottom was separated by liquid-liquid separation. The alcohol component was removed from about 26 g weight of the obtained extract by evaporation by a rotary evaporator while the extract was maintained at 50°C to give 23 g weight of an extract. In the obtained tomato extract, flavor of green odor that is unique to tomato had been decreased, but the residual degree of the flavor of green odor was significantly higher than that of the tomato extract that had been pretreated in the fluidized granulator and dryer.

According to the method of the present invention, flavor granules in which an flavor component has been concentrated and from which unnecessary components have been removed can be readily obtained without subjecting a raw flavor powder derived from a plant to a special pretreatment, by only repeating cycles comprising the steps of spraying water or a binder liquid in a fluidized granulator and dryer and thereafter drying the raw flavor powder until the moisture content reaches the equilibrium moisture content (Ue) of the raw flavor powder.

## Claims

1. A method of producing flavor granules, **characterized by** comprising a cycle comprising steps of:
a) spraying water or a binder liquid onto a raw flavor powder until a moisture content of the raw flavor powder reaches a critical moisture content under fluidization (Uf) while blowing hot air to the raw flavor powder to form a fluidized bed of the raw flavor powder, and
b) drying the raw flavor powder after the step a) until the moisture content of the raw flavor powder reaches an equilibrium moisture content (Ue),
wherein the cycles are repeated two or more times.

2. The method according to claim 1, **characterized by** comprising:
a first cycle in which the step b) is performed immediately after the spraying of water onto the raw flavor powder in the step a), and/or
a second cycle in which the step b) is performed immediately after the spraying of binder liquid onto the raw flavor powder in the step a).

3. The method according to claim 1, **characterized in that** the raw flavor powder are flavor powder derived from a plant raw material containing a carbohydrate, flavor powder obtained by spray drying a plant extract, or sugar powder or sugar granules.

4. The method according to claim 1, **characterized in that** the binder liquid is an extract derived from a plant containing a carbohydrate, or a synthesized flavor solution or formulated flavor solution including a carbohydrate.

5. The method according to claim 1, **characterized in that** the raw flavor powder have a particle size of 10 to 350 µm.

6. The method according to claim 1, **characterized in that** a temperature of the fluidized bed ranges 100 to 150°C.

7. The method according to claim 1, **characterized in that** a temperature of the fluidized bed ranges 45 to 120°C.

8. The method according to claim 1, **characterized in that** an absolute humidity of the hot air ranges 10 to 25 g/m³.

9. The method according to claim 1, **characterized in that** the method is performed in a fluidized granulator and dryer.

## Patentansprüche

1. Verfahren zum Herstellen von Aromagranulat, **dadurch gekennzeichnet, dass** es einen Zyklus umfasst, der folgende Schritte umfasst:
a) Sprühen von Wasser oder einer Bindemittelflüssigkeit auf ein unbehandeltes Aromapulver, bis ein Feuchtigkeitsgehalt des unbehandelten Aromapulvers einen kritischen Feuchtigkeitsgehalt unter Fluidisierung (Uf) erreicht, während heiße Luft auf das unbehandelte Aromapulver geblasen wird, um eine Wirbelschicht aus dem unbehandelten Aromapulver zu bilden, und
b) Trocknen des unbehandelten Aromapulvers nach dem Schritt a), bis der Feuchtigkeitsgehalt des unbehandelten Aromapulvers einen Gleichgewichts-Feuchtigkeitsgehalt (Ue) erreicht,
wobei die Zyklen zweimal oder öfter wiederholt werden.

2. Verfahren nach Anspruch 1, **dadurch gekennzeichnet, dass** es Folgendes umfasst:
- einen ersten Zyklus, in dem der Schritt b) ausgeführt wird, unmittelbar nachdem im Schritt a) Wasser auf das unbehandelte Aromapulver gesprüht wurde, und/oder
- einen zweiten Zyklus, in dem der Schritt b) ausgeführt wird, unmittelbar nachdem im Schritt a) Bindemittelflüssigkeit auf das unbehandelte Aromapulver gesprüht wurde.

3. Verfahren nach Anspruch 1, **dadurch gekennzeichnet, dass** das unbehandelte Aromapulver ein Aromapulver ist, das aus einem Pflanzenrohstoff gewonnen wurde, der ein Kohlenhydrat enthält, ein Aromapulver ist, das durch Sprühtrocknung eines Pflanzenextrakts gewonnen wurde, oder Zuckerpulver oder Zuckergranulat ist.

4. Verfahren nach Anspruch 1, **dadurch gekennzeichnet, dass** die Bindemittelflüssigkeit ein Extrakt ist, der aus einer Pflanze gewonnen wurde, das ein Kohlenhydrat enthält, oder eine synthetisierte Aromalösung oder formulierte Aromalösung ist, die ein Kohlenhydrat enthält.

5. Verfahren nach Anspruch 1, **dadurch gekennzeichnet, dass** das unbehandelte Aromapulver eine Teilchengröße von 10 bis 350 µm hat.

6. Verfahren nach Anspruch 1, **dadurch gekennzeichnet, dass** eine Temperatur der Wirbelschicht im Bereich von 100 bis 150 °C liegt.

7. Verfahren nach Anspruch 1, **dadurch gekennzeichnet, dass** eine Temperatur der Wirbelschicht im Bereich von 45 bis 120 °C liegt.

8. Verfahren nach Anspruch 1, **dadurch gekennzeichnet, dass** eine absolute Luftfeuchte der heißen Luft im Bereich von 10 bis 25 g/m³ liegt.

9. Verfahren nach Anspruch 1, **dadurch gekennzeichnet, dass** das Verfahren in einem fluidisierten Granulator und Trockner ausgeführt wird.

## Revendications

1. Procédé de production de granulés aromatisants, **caractérisé en ce qu'**il comprend un cycle comprenant les étapes consistant à :
a) pulvériser de l'eau ou un liant liquide sur une poudre aromatisante brute jusqu'à ce qu'un taux d'humidité de la poudre aromatisante brute atteigne un taux d'humidité critique par fluidisation (Uf) pendant le soufflage d'air chaud sur la poudre aromatisante brute afin de former un lit fluidisé de la poudre aromatisante brute, et
b) sécher la poudre aromatisante brute après l'étape a) jusqu'à ce que le taux d'humidité de la poudre aromatisante brute atteigne un taux d'humidité d'équilibre (Ue);
dans lequel les cycles sont répétés deux fois ou plus.

2. Procédé selon la revendication 1, **caractérisé en ce qu'**il comprend :
- un premier cycle dans lequel l'étape b) est réalisée immédiatement après la pulvérisation de l'eau sur la poudre aromatisante brute dans l'étape a), et/ou
- un second cycle dans lequel l'étape b) est réalisée immédiatement après la pulvérisation du liant liquide sur la poudre aromatisante brute dans l'étape a).

3. Procédé selon la revendication 1, **caractérisé en ce que** la poudre aromatisante brute est une poudre aromatisante dérivée d'une matière première végétale contenant un hydrate de carbone, poudre aromatisante obtenue par séchage par pulvérisation d'un extrait végétal ou de poudre de sucre ou de granulés de sucre.

4. Procédé selon la revendication 1, **caractérisé en ce que** le liant liquide est un extrait dérivé d'une plante contenant un hydrate de carbone ou une solution aromatisante synthétisée ou une solution aromatisante formulée comprenant un hydrate de carbone.

5. Procédé selon la revendication 1, **caractérisé en ce que** la poudre aromatisante brute a une granulation de 10 à 350 µm.

6. Procédé selon la revendication 1, **caractérisé en ce qu'**une température du lit fluidisée est comprise dans une plage de 100 à 150 °C.

7. Procédé selon la revendication 1, **caractérisé en ce qu'**une température du lit fluidisée est comprise dans une plage de 45 à 120 °C.

8. Procédé selon la revendication 1, **caractérisé en ce qu'**une humidité absolue de l'air chaud est comprise dans une plage de 10 à 25 g/m³.

9. Procédé selon la revendication 1, **caractérisé en ce que** le procédé est mise en oeuvre dans un sécheur granulateur à lit fluidisé.
